# EUROPÄISCHE PATENTANMELDUNG

(11) **EP 1 834 761 A1**
(43) Veröffentlichungstag der Anmeldung: **19.09.2007**
(21) Anmeldenummer: 06005032.5
(22) Anmeldetag: 13.03.2006
(51) Int. Cl.: B32B 25/06

(54) **Verpackungsmaterial zur Konservierung bzw. Haltbarmachung von Lebensmitteln**

(71) Anmelder: Mondi Packaging AG, 1032 Wien (AT)
(72) Erfinder: Prader, Peter, 1180 Wien (AT); Rupp, Christian, 8740 Zeltweg (AT)
(74) Vertreter: Landgraf, Elvira

(57) **Zusammenfassung**

Verpackungsmaterial zur Haltbarmachung und/oder Konservierung von frischem oder getrocknetem Obst Gemüse, oder Nüssen oder Mischungen derselben, dadurch gekennzeichnet, dass das Verpackungsmaterial eine Matrix aus einem natürlichen Polymer oder Biokunststoff aufweist, in die eine chemische Verbindung als Ausgangs- bzw. Startersubstanz für ein vorzugsweise gasförmiges Konservierungsmittel, eingebettet ist.

## Beschreibung

Die Erfindung betrifft eine ein- oder mehrschichtige flexible Filmstruktur, die insbesondere zur Verwendung als Verpackungsmaterial zur Konservierung bzw. Haltbarmachung für Obst und Gemüse, bzw. daraus anderweitig hergestellten Verarbeitungsprodukten geeignet ist. Unter Obst und Gemüse werden erfindungsgemäß alle essbaren pflanzlichen Erzeugnisse bzw. Kulturfrüchte verstanden, insbesondere auch Pilze, Nüsse, Getreide, Saatgut und Pflanzensamen, sowohl im frischen als auch getrockneten Zustand.

Im modernen Handelsumfeld erwartet der Markt bzw. der Konsument unabhängig von der Jahreszeit ein ganzjähriges reichhaltiges Angebot an frischem Obst und Gemüse, auch wenn das entsprechende Produkt lokal gerade nicht Saison hat. Daher werden Obst und Gemüse über immer weitere Strecken vom Produzenten zum Verbraucher transportiert. Die Konservierung bzw. die Sicherstellung oder Erhöhung der Frische und Haltbarkeit von Obst und Gemüse trotz langer Transportwege gewinnt daher immer mehr an Bedeutung. Typischerweise werden Obst und Gemüse dabei unter Kühlung und/oder auf dem Luftweg transportiert, um Produkte möglichst frisch zum Konsumenten zu bringen.

Verpackungen bzw. Verpackungskomponenten für Obst und Gemüse, die ein Konservierungsmittel freisetzen, um ein Verderben oder eine ungewollte Verfärbung der Produkte (z.B. Braunfärbung) zu verhindern, sind seit längerem bekannt und teilweise im Markt eingeführt. Typischerweise werden als Konservierungsmittel dabei Schwefeldioxid oder Chlor verwendet, die aus chemischen Verbindungen (z.B. Natriummetabisulfit (Na₂S₂O₅), Natriumbisulfit (NaHSO₃) oder Calciumhypochlorit (CaCl₂O₂), sogenannten Ausgangsstoffen bzw. Startersubstanzen, unter bestimmten Aktivierungsbedingungen (z.B. Feuchtigkeit) freigesetzt werden.

Besonders Schwefelverbindungen sind seit langem gängige Konservierungsmittel in der Lebensmittel- bzw. anderen Industrien und verhindern enzymatische und nicht-enzymatische Verfärbungen und Wachstum von für das Verderben verantwortlichen Mikroorganismen.
Die Verwendung von Sulfiten zum ,Schwefeln' von Obst und Gemüse (insbesondere Trauben und Trockenfrüchte) hat eine lange Geschichte, unterliegt aber länder- und produktspezifischen Grenzwerten. Beispielsweise erlaubt Australien Schwefeldioxid-Gehalte in getrockneten Früchten bis zu 3000 mg SO₂/kg, was aber durchaus höher sein kann als die Grenzwerte in den Zielexportländem. So gelten für Europa für Schwefeldioxid und andere Sulfite mit den E-Nummem E220-E228 Grenzwerte zwischen 15 und 200mg, für Trockenfrüchte 2000mg.
Wenn durch die Einbindung von SO₂ freisetzenden Substanzen in Verpackungen die Freisetzungskinetik gezielt gesteuert werden kann und der direkte Lebensmittelkontakt des Ausgangsstoffes bzw. der Startersubstanz verhindert werden kann, so wird somit eine sicherere Anwendung und die Einhaltung der entsprechenden Grenzwerte wesentlich erleichtert.

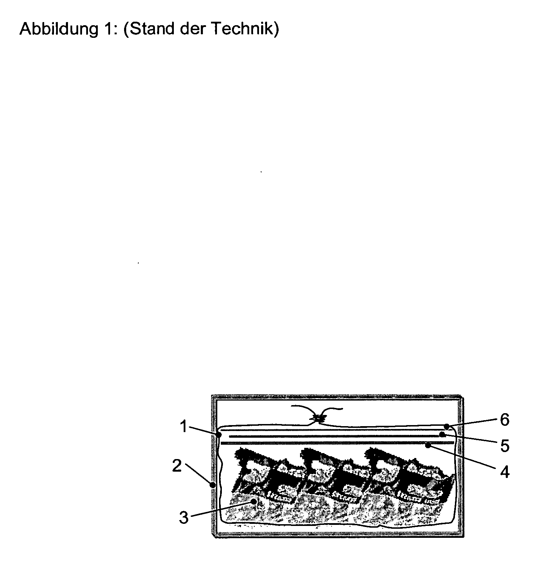

Beispielsweise sind für die Konservierung von Tafeltrauben zur Vermeidung von Befall durch den Schimmelpilz Botrytis Cinerea mehrlagige Papier-, Kunststoff- bzw. Verbundkonstruktionen bekannt, bei denen ein z.B. Substratfilm mit einer Matrix, in der die SO₂ abgebenden Substanzen dispergiert sind, beschichtet wird. Diese Beschichtung wird anschließend gegen eine weitere Schicht, beispielsweise einem Vlies oder Gewebe, laminiert, um einen direkten Kontakt der aktiven Substanz mit dem Packgut zu verhindern. Dieser mehrschichtige Aufbau erfordert mehrstufige Produktionsprozesse. Das Endprodukt ist zumeist relativ starr und für flexible Verpackungen weniger geeignet. Daher wird es zumeist in Blatt- bzw. Bogenform in andere Verpackungen integriert. Bei allen derzeit kommerziell eingeführten Systemen (Vinguard®, Grapetek®, UVAS®, OSKU®, Quimetal®) ist der Endaufbau der Verpackung ähnlich komplex und in Abb. 1 exemplarisch dargestellt.

In Abb. 1 bedeuten (1) der Beutel oder die Einschlagfolie aus Polyethylen, (2) die Wellpappebox oder -steige, (3) das Produkt, z.B. Trauben, eingewickelt oder eingesackt z.B. in einem Polyethylenfilm bzw. -beutel, (4) ein Papiervlies zur Feuchtigkeitsregulierung, (5) ein SO₂ abgebendes Blatt, (6) einen Wellpappebogen bzw. -polster zur Feuchtigkeitsregulierung.

Der hohe Einsatz an Verpackungsmaterial und auch der hohe manuelle Arbeitsaufwand für das Abpacken lässt diese gängigen Systeme aus produktionsökonomischen Gesichtspunkten nicht effizient erscheinen. Des Weiteren sind zur Herstellung derartiger Verpackungen bzw. Verpackungskomponenten komplexe, mehrstufige Produktionsverfahren erforderlich, um die für die Freisetzung der Konservierungsmittel notwendigen Ausgangs- und Startersubstanzen in das Verpackungsmaterial zu integrieren. Ein wesentlicher Grund für diese komplexen Herstellungsprozesse ist, dass diese Verbindungen oft temperatur- und/oder feuchtigkeitsempfindlich sind und daher kaum in bisher üblicherweise verwendete synthetische Polymere eingebracht werden können, da bereits die gängigen Prozesstemperaturen zur Herstellung von polymeren Verpackungsfolien höher sind als die Zersetzungstemperatur der Ausgangs- und Startersubstanzen. Es können daher auch keine flexiblen, den gängigen Beuteln, Säcken oder Folien ähnlichen Verpackungsmaterialen aus den synthetischen Polymeren hergestellt werden, bei denen die Ausgangs- und Startersubstanzen im Polymer dispergiert sind. Des Weiteren sind manche dieser Produkte als kritisch hinsichtlich der Vermeidung von direkten Lebensmittelkontakt der SO₂ abgebenden Substanzen einzustufen, da sich diese sehr oft an den offenen Schnittkanten loslösen können.

Aufgabe der Erfindung war es, diese Herstellungsprozesse zu vereinfachen und vor allem ein flexibles Verpackungsmaterial bereitzustellen, das eine oder mehrere Substanzen vorzugsweise in gasförmiger Form abgibt, die für Obst, Gemüse bzw. für daraus anderweitig hergestellte Produkte konservierende bzw. keimtötende Eigenschaften aufweist, dadurch das Packgut länger frisch hält, konserviert oder ungewollte visuell erkennbare Veränderungen (beispielsweise Braunfärbungen und dergleichen) verhindert.
Ferner soll das Verpackungsmaterial über gängige Extrusionsverfahren, wie u. a. Folienblasverfahren, zu Folien und in weiterer Folge zu Beuteln, Säcken, Hüllen, losen Folien oder dergleichen weiterverarbeitet werden können bzw. direkt als Einschlagfolie verwendet werden können.

Gegenstand der Erfindung ist dementsprechend ein aktives Verpackungsmaterial zur Haltbarmachung und/oder Konservierung von frischem oder getrocknetem Obst und/oder Gemüse, dadurch gekennzeichnet, dass das Verpackungsmaterial eine Matrix aus einem natürlichen Polymer bzw. einem Biokunststoff oder eine Matrix aus Mischungen mehrerer natürlicher Polymere bzw. Biokunststoffe aufweist, in die eine oder mehrere chemische Verbindung bzw. Verbindungen als direktes Konservierungsmittel oder als Ausgangs- bzw. Startersubstanz für ein vorzugsweise gasförmig entweichendes Konservierungsmittel, eingebettet ist.

Insbesondere für SO₂ oder andere Sulfite als Konservierungsmittel kommen als Ausgangsverbindungen beispielsweise Natriummetabisulfit, Natriumbisulfit oder andere SO₂ abgebende Substanzen, wie die in der Europäischen Union unter E220-E228 zugelassene Stoffe beziehungsweise die bei der US Food and Drug Administration unter 21 CFR Kapitel 1 - Teil 182 gelisteten Stoffe in Frage. Ferner kommt als Konservierungsmittel Calciumhypochlorit oder andere Chlor abgebende Substanzen in Frage.

Dieses Verpackungsmaterial weist eine flexible Folienstruktur bestehend zumindest aus einer oder mehreren Lagen eines sogenannten natürlichen Polymers bzw. Biokunststoffes, in welche die Konservierungsmittel abgebende Substanz eingebettet ist auf. Es zeichnet sich durch - im Vergleich zu den typischerweise für derartige Verpackungen eingesetzten synthetischen Polymeren, u.a. Polyolefinen wie Polyethylen (u.a. HDPE, LDPE, LLDPE) oder Polypropylen (u.a. CPP, OPP) - niedrigere Verarbeitungstemperaturen in den gängigen Film- bzw. Folienextrusionsverfahren aus. Diese Verarbeitungstemperaturen liegen unter der Zersetzungs- bzw. Freisetzungstemperatur für die üblicherweise verwendeten Konservierungsmittel bzw. deren Ausgangs- und Startersubstanzen.

Unter natürlichen Polymeren bzw. Biokunststoffen werden innovative Kunststoffe verstanden, die zumindest zu einem die Eigenschaften bestimmenden Teil aus nachwachsenden Rohstoffen hergestellt werden. Biokunststoffe können beständig sein oder biologisch abbaubar, d.h. durch mikrobiellen Angriff z.B. durch Pilze oder Bakterien zersetzbar. Erfolgt der biologische Abbau so schnell, dass eine Zersetzung während praxisüblicher Rottezeiten in Kompostieranlagen - im Regelfall in 6 bis 12 Wochen - gewährleistet ist, so sind diese "kompostierbar". Für den Nachweis der Kampostierbarkeit wurden eigens Normen mit entsprechenden Prüfverfahren geschaffen (EN13432, ASTM D 6400 oder ASTM D 6868).

Als natürliche Polymere bzw. Biokunststoffe werden vorzugsweise thermoplastische Stärke oder andere stärkebasierte Polymere, Zellulose basierte Polymere (z.B. regenerierte Zellulose, Zellulosehydrat oder Zelluloseacetat), Polyester wie Polymilchsäure (PLA), Polyhydroxyalkanoate (PHA), Polybutylenterephthalat (PBT) oder Polytrimethylenterephthalat (PTT), des Weiteren Polymere basierend auf pflanzlichen Ölen (wie z.B. bio-basierte Polyurethane (PUR), bei denen die Herstellungskomponente Polyol aus Ölsaaten wie Rizinussamen, Sojabohnen oder Sonnenblumen gewonnen werden kann), Polycaprolactam (PCL), bio-basierte Polyamide (PA) oder protein- u. zuckerbasierte Polymere (wie z.B. Gelatine, Kollagen, Kasein oder Chitin) oder Mischungen aus den angeführten Polymeren eingesetzt.

Den erfindungsgemäßen natürlichen Polymeren können des Weiteren synthetische biologisch abbaubare Polymere wie abbaubare, aliphatisch aromatische Copolyester, und oder synthetische wasserlösliche Polymere, wie Polyvinylacetat, Polyvinylalkohol oder Co-Polymere von Ethylen und Vinylacetat, zugesetzt werden.

Die erfindungsgemäß verwendeten Polymere zeichnen sich durch eine niedrigere Schmelztemperatur und Verarbeitungstemperatur als erdölbasierte Kunststoffe (wie z.B. Polyolefine oder Polyester) aus.
Vorzugsweise werden daher natürliche Polymere oder Biokunststoffe bzw. Mischungen daraus verwendet, deren Verarbeitungs- bzw. Extrusionstemperaturen zwischen 80 und 150°C liegen. Als Verarbeitungs- bzw. Extrusionstemperaturen werden die während des jeweiligen Prozesses auftretenden maximalen Temperaturen verstanden.
Beispiele für verwendbare Polymere sind insbesondere stärkebasierende Polymere, wie z.B. jene der Fa. Novamont (Mater-bi und Origo-bi Typen) oder der Fa. Plantic, mit Extrusionstemperaturen vorzugsweise zwischen 80 und 150 °C. Des Weiteren kommen in Frage Polymilchsäurepolymere (PLA) (z.B. jene der Fa. Natureworks oder Hycail), oder Polyhydroxyalkanoate (PHA) (z.B. jene der Fa. Metabolix, Procter & Gamble oder Biomer) und dergleichen, deren Verarbeitungstemperatur unter etwa 150°C liegt. Derartige Polymere sind dem Fachmann aus der einschlägigen Fachliteratur bekannt.

Dadurch kann gewährleistet werden, dass die Prozesstemperatur in den genannten Verarbeitungsverfahren unter der Schmelz- oder Zersetzungstemperatur der aktiven, in die Polymermatrix eingebetteten und bei Aktivierung konservierende Substanzen abgebenden Verbindung liegt und die Funktionsfähigkeit im Verpackungsendprodukt erhalten bleibt.

Aufgrund der besonderen Eigenschaften von natürlichen Polymeren kann das Verpackungsmaterial auch vollständig biologisch abbaubar bzw. kompostierbar ausgelegt werden, was besonders aus ökologischen Gesichtspunkten eine wesentliche Eigenschaft des erfindungsgemäßen Verpackungsmaterials darstellt.

Das Verpackungsmaterial kann als ein- oder mehrlagige Folie mit einer oder mehreren Schichten, in die eine aktive Substanz eingebettet ist, ausgeführt sein.

Die Einbringung der aktiven Verbindung in das Matrixpolymer erfolgt vorzugsweise vor der Herstellung der Folie in einem konventionellen Mischverfahren.

Die Folie kann durch ein konventionelles Folienblasverfahren oder andere Extrusionsverfahren oder im Falle einer mehrlagigen Struktur durch ein Koextrusionsverfahren oder Koextrusionsbeschichtungs- oder Koextrusionskaschierungsverfahren hergestellt werden, wobei die besonderen Eigenschaften des jeweils gewählten natürlichen Polymers eine Prozesstemperaturführung unter der Zersetzungstemperatur der aktiven Substanz erlauben.

Dadurch kann die aktive Substanz direkt in ein Polymer eingebettet und mit den bekannten Extrusionsverfahren wie Blasfolien- oder Breitschlitzextrusion sowie Extrusionsbeschichtung im Mono- oder Koextrusionsverfahren verarbeitet werden.

Die Freisetzung des Konservierungsmittels, vorzugsweise in gasförmiger Form, aus der aktiven Verbindung erfolgt im Wesentlichen durch feuchtigkeitsinduzierte Zersetzung der aktiven Verbindung. Da natürliche Polymere im Allgemeinen hohe Wasserdurchlässigkeit und oft eine zumeist partielle Wasserlöslichkeit aufweisen, die in einem breiten Bereich kontrolliert und variiert werden kann, kann Feuchtigkeit direkt in die polymere Struktur hinreichend diffundieren und somit eine effiziente Freisetzung des Konservierungsmittels erfolgen und so die Haltbarkeit des frischen Obstes oder des Gemüses gewährleistet werden. Zur Steuerung der Flüssigkeits- bzw. Gasdiffusion können neben den Ausgangs- und Startersubstanzen weitere andere Substanzen in der Matrix partikelförmig dispergiert werden, die sogenannte Diffusionskanäle hervorrufen, insbesondere wasserlösliche Substanzen wie Stärke oder mineralische Substanzen wie Zeolite, Kalk- oder Gipsmineralien.

Ein erfindungsgemäßes mehrlagiges Verpackungsmaterial kann beispielsweise die Matrix, die die aktive Verbindung enthält, mit einer oder mehren Schichten aus einem natürlichen Polymer ohne eingebettete aktive Verbindung kombinieren.
Ferner ist es möglich die Matrix mit einer oder mehreren Schichten aus Papier und/oder konventionellen synthetischen Polymeren, wie Polyolefinen (z.B. Polyethylen oder Polypropylen) oder Polyestem zu kombinieren.

Um ein Austreten der Ausgangs- bzw. Startersubstanz nach der Konfektionierung, beispielsweise durch Schneiden oder Stanzen, zu verhindern, wird der Schneidevorgang bzw. Stanzvorgang durch erwärmte Schneide- bzw. Stanzvorrichtungen durchgeführt. Dabei wird die Schneide- bzw. Stanzvorrichtung, beispielsweise Messer, über die Glasübergangstemperatur der eingesetzten Polymere erwärmt, wodurch die Schnittkante beim Schneide- bzw. Stanzvorgang gleichzeitig versiegelt wird.

Das erfindungsgemäße Verpackungsmaterial ist wesentlich einfacher und wirtschaftlicher herzustellen als die nach dem Stand der Technik bekannten Konstruktionen.
Der dadurch hergestellte flexible Verpackungsfilm kann direkt zu Primär- oder Sekundärverpackungen weiterverarbeitet (z.B. zu Hüllen, Beutel, Säcken, Schrumpffolien, Palettenhüllen, Kartoneinlagesäcken und -folien), aber auch als Abdeckfolie oder Deckelfolie in Kartonagen oder Siegelfolien für starre Verpackungen wie Verpackungsschalen oder dergleichen verwendet werden.

Ferner kann das erfindungsgemäße Verpackungsmaterial als Extrusionsbeschichtung bzw. Kaschierung von Wellpappenrohpapieren, insbesondere Deckenpapieren, oder Karton verwendeten werden und somit direkt zur Herstellung von starren und Konservierungsmittel abgebenden Verpackungsmitteln, wie Schachteln, Steigen etc... verwendet werden.

Ferner können zusätzlich oder anstelle der Ausgangs- bzw. Startersubstanzen andere für Pflanzen bzw. deren Früchten relevante Verbindungen, wie Pestizide, Fungizide, Herbizide, Düngemittel oder Schädlingslockstoffe (z.B. Pheromone) oder andere antimikrobiellen Wirkstoffe, insbesondere antimikrobielle Wirkstoffe natürlichen Ursprungs wie Extrakte aus Zitrusfrüchten, in die Matrix, z.B. elementar oder aber auch über Mikroverkapselung eingebracht werden.

Diese Folien können dann nicht nur als Verpackungsmaterialien, sondern beispielsweise auch als Mulchfolien oder Emtefolien oder Wachstumsfolien im Anbau und der Ernte von Obst oder Gemüse verwendet werden. Beispielsweise können die Folien als Herbizid-abgebende Wachstumsfolien für Bananen, als Mulchfolien für Tomaten und dergleichen eingesetzt werden.

Das erfindungsgemäße Verpackungsmaterial kann aus einem Monofilm eines natürlichen Polymers bestehen, vorzugsweise in einer Dicke zwischen 10 und 1000 µm.

Im Falle eines mehrlagigen Folienverbundes mit ein oder mehreren Lagen eines natürlichen und die aktive Substanz beinhaltenden Polymers kann die Dicke der jeweiligen Schichten des natürlichen Polymers zwischen 5 und 1000 µm betragen.
Diese mehrlagige Struktur wird vorzugsweise über Blasfolien-Koextrusion oder ein- oder mehrlagige Extrusionsbeschichtung eines Trägermaterials auf Metall-, Papier-, Zellulose oder Kunststoffbasis (sowohl synthetische als auch natürliche Polymere) oder Extrusionskaschierung zweier Trägermaterialien auf Metall-, Papier-, Zellulose- oder Kunststoffbasis (sowohl synthetische als auch natürliche Polymere) hergestellt werden. Unter Extrusionskaschierung wird sinngemäß verstanden, dass das natürliche und die aktive Substanz beinhaltende Polymer extrudiert und zur Verbindung zweier anderer Substrate verwendet wird.
Des Weiteren können die einzelnen Lagen des natürlichen und die aktive Substanz beinhaltenden Polymers über Kleberkaschierung miteinander bzw. mit anderen Trägermaterialien auf Metall- Papier-, Zellulose- oder Kunststoffbasis (sowohl synthetische als auch natürliche Polymere) verbunden werden.

Das erfindungsgemäße Verpackungsmaterial kann aus einem mehrlagigen, vorzugsweise im Koextrusionsverfahren hergestellten Folienverbund bestehen, bei denen eine oder mehrerer Lagen des natürlichen und die aktive Substanz beinhaltenden Polymers durch eine Innen- und Außenlage eines natürlichen Polymers ohne aktive Substanz eingekapselt wird bzw. werden und somit ein direkter Lebensmittelkontakt vermieden wird. Schnittkanten werden durch eine Erwärmung der Schneidewerkzeuge über die Glasübergangstemperatur des Polymers versiegelt.

Im Falle eines mehrlagigen Folienverbundes mit ein oder mehreren Lagen eines natürlichen und die aktive Substanz beinhaltenden Polymers können die einzelnen Lagen des natürlichen Polymers unterschiedliche aktive Substanzen in unterschiedlichen Konzentrationen beinhalten und so die Kinetik der Freisetzung von konservierenden Substanzen gezielt gesteuert werden. Bei sehr vielen Anwendungen, insbesondere bei Verwendung als Verpackungskomponente für Tafeltrauben ist eine kontrollierte zwei- oder mehrstufige Freisetzung von SO₂ (sogenannte 'dual-release'- bzw. "slow-/quickrelease' Funktion) von entscheidender Bedeutung, um (1) unmittelbar nach dem Verpacken möglichst rasch eine entsprechende SO₂ Konzentration zu erreichen und (2) während des Transportes (besonders bei Seefracht) eine gleichmäßige SO₂-Konzentration über ggf. mehrere Wochen zu gewährleisten.

## Patentansprüche

1. Verpackungsmaterial zur Haltbarmachung und/oder Konservierung und/oder Verhinderung ungewollter visueller Veränderungen von frischem oder getrocknetem Obst oder Gemüse bzw. anderen essbaren pflanzlichen Erzeugnissen bzw. Kulturfrüchten oder Mischungen derselben, **dadurch gekennzeichnet, dass** das Verpackungsmaterial eine Matrix aus einem natürlichen Polymer oder Biokunststoff aufweist, in die eine oder mehrere chemische Verbindungen als Ausgangs- bzw. Startersubstanz für ein vorzugsweise gasförmiges Konservierungsmittel, eingebettet ist bzw. sind.

2. Verpackungsmaterial nach Anspruch 1, **dadurch gekennzeichnet, dass** die eingebettete(n) chemische(n) Verbindung()en, die als Ausgangs bzw. Startersubstanz für ein Konservierungsgas wie SO₂ oder Cl₂, dient/dienen, aus der Gruppe enthaltend Natriummetabisulfit, Natriumbisulfit oder andere SO₂ abgebende Substanzen, wie die in der Europäischen Union unter E220-E228 zugelassene Stoffe beziehungsweise die bei der US Food and Drug Administration unter 21 CFR Kapitel 1 - Teil 182 gelisteten Stoffe, oder Calciumhypochlorit oder andere Chlor abgebende Substanzen, ausgewählt sind.

3. Verpackungsmaterial nach einem der Ansprüche 1 oder 2, **dadurch gekennzeichnet, dass** die Freisetzung des Konservierungsmittels über Feuchtigkeit aktiviert wird.

4. Verpackungsmaterial nach einem der Ansprüche 1 bis 3, **dadurch gekennzeichnet, dass** als natürliche Polymere oder Biopolymere thermoplastische Stärke oder andere stärkebasierte Polymere, Zellulose basierte Polymere (z.B. regenerierte Zellulose, Zellulosehydrat oder Zelluloseacetat), Polyester wie Polymilchsäure (PLA), Polyhydroxyalkanoate (PHA), Polybutylenterephthalat (PBT) oder Polytrimethylenterephthalat (PTT), des Weiteren Polymere basierend auf pflanzlichen Ölen (wie z.B. bio-basierte Polyurethane), Polycaprolactam (PCL), bio-basierte Polyamide (PA) oder protein- u. zuckerbasierte Polymere (wie z.B. Gelatine, Kollagen, Kasein oder Chitin) oder Mischungen aus den angeführten Polymeren eingesetzt werden.

5. Verpackungsmaterial nach einem der Ansprüche 1 bis 4, **dadurch gekennzeichnet, dass** das Verpackungsmaterial biologisch abbaubar bzw. kompostierbar ist.

6. Verpackungsmaterial nach einem der Ansprüche 1 bis 5, **dadurch gekennzeichnet, dass** die natürlichen Polymere oder Biopolymere eine Verarbeitungstemperatur unter der Zersetzungstemperatur der eingebetteten aktiven Verbindung aufweist.

7. Verpackungsmaterial nach Anspruch 6, **dadurch gekennzeichnet, dass** die natürlichen Polymere oder Biopolymere eine Verarbeitungstemperatur unter 150°C aufweisen.

8. Verpackungsmaterial nach einem der Ansprüche 1 bis 7, **dadurch gekennzeichnet, dass** in das erfindungsgemäße Verpackungsmaterial zusätzlich oder anstelle der Ausgangs- bzw. Startersubstanzen auch andere für Pflanzen relevante Wirkstoffe wie Pestizide, Fungizide, Herbizide, Düngemittel, Schädlingslockstoffe (z.B. Pheromone) oder andere antimikrobielle Wirkstoffe, insbesondere antimikrobielle Wirkstoffe natürlichen Ursprungs, wie Extrakte aus Zitrusfrüchten, eingebettet, z.B. elementar oder aber auch über Mikroverkapselung, sein können.

9. Verpackungsmaterial nach einem der Ansprüche 1 bis 8, **dadurch gekennzeichnet, dass** eine oder mehrere eine Matrix aus einem natürlichen Polymer darstellende und die aktive Verbindung enthaltende Schichten gegen eine oder mehrere weitere Schichten aus einem natürlichen oder synthetischen Polymer und/oder aus Metall-, Papier, Karton, Kunststoff oder anderen cellulosebasierten Schichten kaschiert oder laminiert sind.

10. Verpackungsmaterial nach einem der Ansprüche 1 bis 7, **dadurch gekennzeichnet, dass** die eine Matrix aus einem natürlichen Polymer darstellende und die aktive Substanz enthaltende Schicht ein Monofilm einer Dicke von 10 bis 1000 µm darstellt.

11. Verpackungsmaterial nach einem der Ansprüche 1 bis 9, **dadurch gekennzeichnet, dass** die eine Matrix aus einem natürlichen Polymer darstellende und die aktive Substanz enthaltende Schicht ein mehrlagiger Folienverbund ist, wobei die Dicke der einzelnen Schichten zwischen 5 und 1000 µm beträgt.

12. Verpackungsmaterial nach einem der Ansprüche 1 bis 12, **dadurch gekennzeichnet, dass** eine oder mehrere Lagen des natürlichen und die aktive Substanz beinhaltenden Polymers durch eine Innen- und Außenlage eines natürlichen Polymers ohne aktive Substanz umgeben sind.

13. Verpackungsmaterial nach einem der Ansprüche 1 bis 12, **dadurch gekennzeichnet, dass** es als Extrusionsbeschichtung bzw. Kaschierung von Wellpappenrohpapieren, insbesondere Deckenpapieren, oder Karton verwendet wird.
